# EUROPEAN PATENT SPECIFICATION

(11) **EP 0 560 290 B1**
(45) Date of publication and mention of the grant of the patent: **18.09.1996**
(21) Application number: 93103771.7
(22) Date of filing: 09.03.1993
(51) Int. Cl.: F01N 3/28

(54) **Method of fabricating an exhaust gas purifying catalytic converter**
Verfahren zur Herstellung eines katalytischen Konverters zur Abgasreinigung
Procédé de fabrication d'un convertisseur catalytique pour la purification des gaz d'échappement

(30) Priority: 09.03.1992 JP 50408/92; 09.03.1992 JP 50409/92; 09.03.1992 JP 50413/92; 09.03.1992 JP 50414/92
(43) Date of publication of application: 15.09.1993
(73) Proprietor: MITSUBISHI JIDOSHA KOGYO KABUSHIKI KAISHA, Tokyo 108 (JP); MITSUBISHI JIDOSHA ENGINEERING KABUSHIKI KAISHA, Tokyo (JP)
(72) Inventor: Danno, Yoshiaki, Nishikyo-ku, Kyoto-shi, Kyoto (JP); Koga, Kazuo, Otokuni-gun, Kyoto (JP); Tanida, Tetsuya, Kyoto-shi, Kyoto (JP); Ishida, Hidekazu, 237 Kyotoshijo Gurandohaitsu, Kyoto-shi, Kyoto (JP)
(74) Representative: Strehl Schübel-Hopf Groening & Partner

(56) References cited:
- WO-A-89/10470

## Description

A method of fabricating an exhaust gas purifying catalytic converter in accordance with the first part of claim 1 is known from WO 89/10470. A catalyst carrier of strip-shaped honeycomb structure is squeezed or crushed at intervals to simplify the bending of the strip material into a meander or zigzag-type arrangement of an overall shape that fit into the respective converter casing.

It is an object of the present invention to provide a method which permits manufacturing a compact catalytic structure easily and with high precision of its overall outer shape.

This object is accomplished by the method defined in claim 1.

Preferred embodiments of the invention will be described with reference to the drawings, in which
Fig. 1 is a schematic view showing the outer structure of an exhaust gas purifying catalytic converter,
Fig. 2 is a sectional view taken along the lines II-II in Fig. 1;
Fig. 3 is an enlarged sectional view of an electrode portion of Fig. 2;
Figs. 4 to 6 are diagrammatic views showing the fabrication procedure for a catalyst unit folding portion;
Fig. 7 is a perspective view showing a structure of a second embodiment of the present invention;
Fig. 8 is a perspective view showing a structure of a third embodiment of the present invention;
Fig. 9 is a sectional view showing a fourth embodiment of the present invention;
Fig. 10 is an enlarged sectional view of an electrode portion according to the fourth embodiment of the present invention;
Fig. 11 is another sectional view of the fourth embodiment of the present invention; and

Figs. 12 to 14 are diagrams showing a fabrication procedure of a catalyst unit folded portion according to a fifth embodiment of the present invention.

Hereinafter, the preferred embodiments of the present invention will be described in detail with reference to the accompanying drawings.

### Embodiment 1

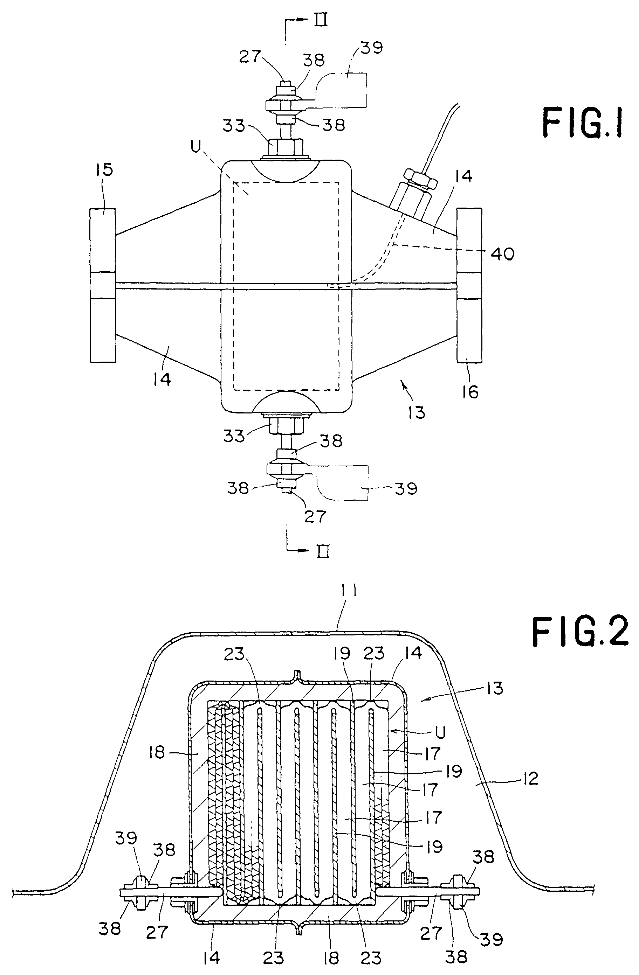

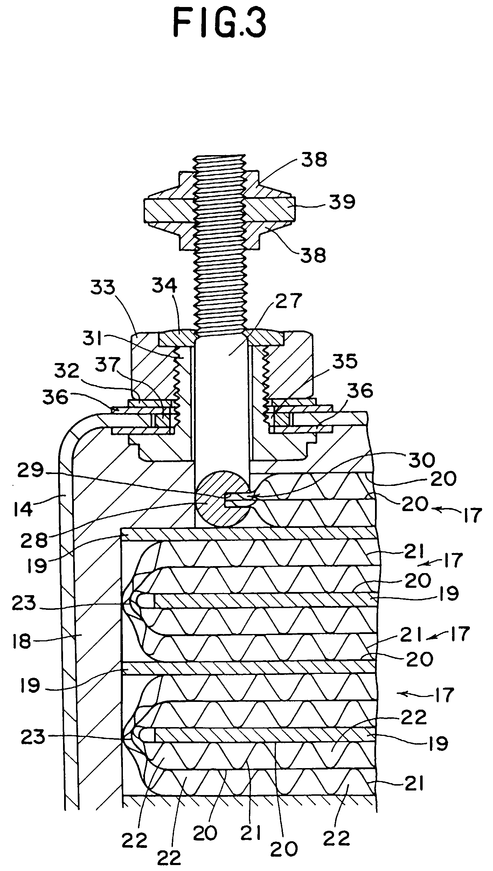

With reference to Figs. 1 to 6, there will be described a first embodiment.

As shown in these figures, an auxiliary catalytic converter 13 is stored in a floor tunnel 12 formed at the central portion of a floor panel 11 constituting a part of a vehicular body. It has a casing 14 having a right and left two-split structure in which two-pieces are finally seam-welded. At both ends of the casing 14, there are formed a connection flange 15 connected to an outlet side of an exhaust manifold communicated to a combustion chamber of an engine, and a connection flange 16 connected to an outlet side of an exhaust tube in which a main catalytic converter is disposed.

In the casing 14 made of SUS 410 or the like, there are stored a catalyst unit group U constituted of a plurality of catalyst units 17 arranged at specified intervals along the width direction of the vehicular body (right and left directions, in Fig. 2); a supporter 18 interposed between the catalyst unit group U and the casing 14; and a spacer 19 interposed between the adjacent catalyst units 17 in the array direction.

The catalyst unit 17 fabricated using a corrugator or the like (not shown) has a such structure that a plurality of flat sheet members 20 and corrugated sheet members 21 are alternately laminated to form a plurality of reaction passages 22. These flat sheet member 20 and corrugated sheet member 21 constitutes a carrier, each of which is formed of a heat resisting alloy of an iron-chromium-aluminum system having a thickness of 40 to 50 µ m, and the abutted portions thereof are integrally joined by means of a brazing filler material of a nickel-chromium system.

Also, on the surfaces of these flat sheet member 20 and the corrugated sheet member 21 constituting the carrier, an oxidation catalyst such as platinum or palladium (not shown) is carried. With this construction, in the course of time when the exhaust gas passes through reaction passages 22, the oxidation reaction for the unburnt component such as harmful hydrocarbon in the exhaust gas discharged from the combustion chamber 7 of the engine 6 is activated by the oxidation catalyst, and thereby the exhaust gas is made harmless.

In this embodiment, the material for the catalyst units 17 is fabricated in a continuous strip shape using a corrugator or the like, and is folded for each specified length in a zigzag shape, to thus form the catalyst unit group U by making the material for the catalyst units 17 being multi-staged. In addition, the above folded portion 23 constitutes a unit connecting means of the present invention.

The above supporter 18 serving as an insulating support layer of the present invention is made of an inorganic cushioning material having a thermal insulating property in combination with an electric insulating property such as "Interam/mat" sold by 3M Co., Ltd (U.S) for stably supporting the catalyst unit group U in the casing 14.

Also, the above spacer 19 held between the adjacent catalyst units 17 is intended to hold the catalyst units 17 at a specified interval and to prevent the adjacent catalyst units 17 from being electrically shortened without passing through the folded portion 23, and which is made of cordierite or the like used as a ceramic system catalyst carrier having an electric insulating property. The spacer 19 in this embodiment is interposed between the adjacent catalyst units 17 over the whole region in the height direction. However, it may be interposed between the catalyst units 17 only at upper and lower end portions thereof, and the remaining gap portions may be used as the reaction passages.

A pair of electrodes 27 project from the right and left sides of the lower end portion of the casing 14 to pass through the supporter 18 and the casing 14. The central portion of an electrode connecting rod 28 extending in parallel to the reaction passage 22 is integrally connected to the base end of each electrode 27. A connecting groove 29 is formed on the electrode connecting rod 28 along the longitudinal direction thereof. Each of connecting portions 30, which are respectively formed by pressing at the lower end portions of the catalyst units 17 positioned on the right and left sides of the casing 14, is inserted into the connecting groove 29, and which is integrally joined to the electrode connecting rod 28 through the brazing filler material (not shown).

A lock nut 33 is screwed in a hollow bolt 31, through which the electrode 27 passes to be locked with the casing 14, through a washer 32. The electrode 27, the hollow bolt 31 and the lock nut 33 are seal-welded to each other at the weld 34, to thereby certainly seal the interior of the casing 14. These electrode 27, electrode connecting rod 28, hollow bolt 31, washer 32, lock nut 33 are made of nickel or the like having an excellent heat resistance. Around an electrode through-hole 35 of the casing 14 through which the hollow bolt 31 passes, a pair of seal washers 36 and an insulating ring 37 made of artificial mica, ceramic or the like are interposed. In other words, the inside and the outside of the casing 14 are held by the hollow bolt 31 and the lock nut 33 through the seal washers 36 and the insulating ring 37 having the electric insulating property, so that the electrode 27 is fixed to the casing 14.

In addition, at the leading edge of the electrode 27, a terminal 39 connected to a power supply is fixed by a pair of flanged nuts 38 screwed in the electrode 27. Also, on the downstream side of the casing 14, there is provided a temperature sensor 40 using a thermocouple or the like for detecting the temperature of the catalyst units 17.

As described above, it is possible to remarkably increase the current passage length of the carrier of the auxiliary catalytic converter 13, and to increase the supply voltage to the auxiliary catalytic converter 13. This makes it possible to activate the auxiliary catalytic converter 13 for a short time.

In addition, in this embodiment, the catalyst units 17 are arranged along the width direction of the vehicular body; however, the catalyst units 17 arranged in the vertical direction of the vehicular body may be further connected to each other in series along the flow direction of the exhaust gas.

According to the exhaust gas purifying catalytic converter of this embodiment, by arrangement of the flat catalyst units in the laminated state, it is possible to avoid the enlargement of the size of the catalytic converter .

Also, both end portions of these catalyst units are alternately connected to each other by the unit connecting means, so that a current is allowed to flow in the zigzag manner. As a result, the current passage of the carrier is increased, to thereby increase the absolute heat generation. Therefore, by increasing the supply voltage to the catalytic converter, it is possible to activate the catalyst for a short time without increasing the capacity of the power supply.

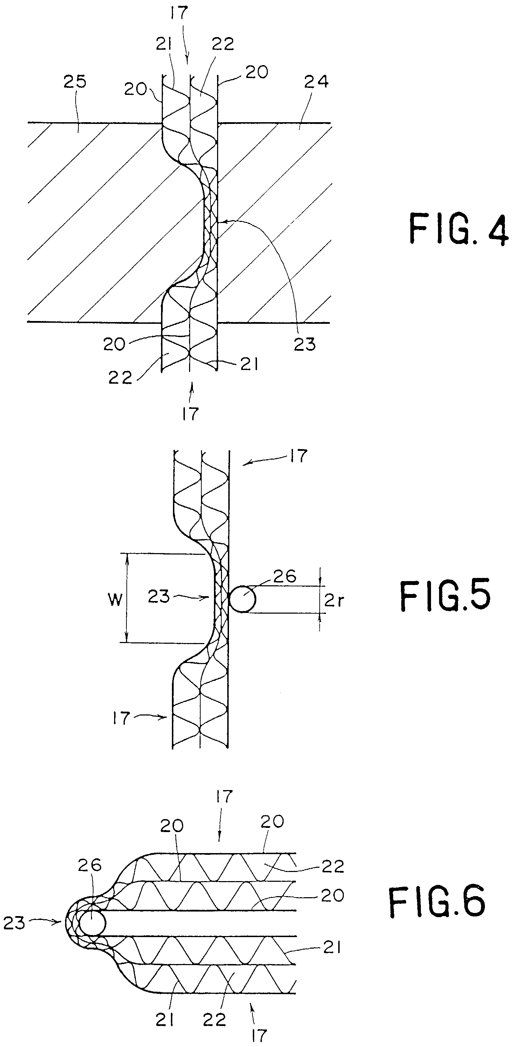

Next, there will be described a method of fabricating a catalyst unit group U according to a second aspect of the present invention with reference to Figs. 4 to 6.

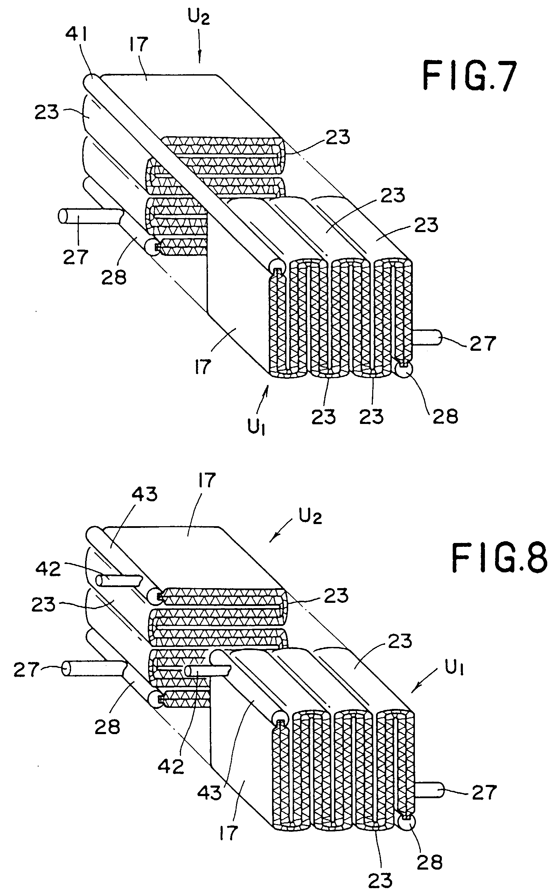

As shown in Figs. 4 to 6 showing the fabrication procedure of the catalyst unit group U of the present invention, each folded portion 23 of a sheet-like material for the catalyst units 17 is crushed between a die 24 and a punch 25 (see Fig. 4); a core bar 26 is contacted with the plastically deformed folded portion 23 on the die 24 side (see Fig. 5); the leading edge side of the material for the catalytic units 17 is folded at 180 ° along the core bar 26 with respect to the core bar 26 (see Fig. 8); and the core bar 26 is withdrawn, to thus form the folded portion 23.

In addition, assuming that the ratio of the circumference of a circle to its diameter is taken as π and the radius of the core bar 26 is taken as "r", it is preferable that the crush allowance W of the material for the catalyst units 17 by the punch 25 is set at π X r or more, and the radius "r" of the core bar 26 is set at 0.5mm or more (namely, the thickness of the spacer 19 is lmm or more). Also, naturally, the core bar 26 may be integrally joined to the folded portion 23 of the material for the catalytic units 17 as it is.

### Embodiment 2

Next, a second embodiment will be described with reference to Fig. 7.

First, there is prepared a catalyst unit group U₂ in the state being rotated at 90° with respect to the catalyst unit group U₁ described in the first embodiment. The catalyst unit 17 on one end side of the catalyst unit group U₁ is connected in series to the catalyst unit 17 on one end side of the catalyst unit group U₂ by means of a long-sized unit connecting rod 41 having substantially the same construction as the electrode connecting rod 28 described above. On the other hand, the catalyst unit 17 on the other end side of the catalyst unit group U₁ is connected to the catalyst unit 17 of the catalyst unit group U₂ by means of each electrode connecting rod 28 with the projecting electrode 27.

In this case, by formation of a gap between the catalyst unit group U₁ and the catalyst unit group U₂, the current passage length of the carrier becomes twice as much as that of the first embodiment, thereby further increasing the supply voltage to the catalytic converter. This makes it possible to further increase the amount of generated heat of the catalytic converter without increasing the capacity of the power supply 5.

### Embodiment 3

Also, a third embodiment is shown in Fig. 8. In the second embodiment as shown in Fig. 7, the catalyst unit groups U₁ and U₂ are connected to each other by means of one of the unit connecting rod 41. On the contrary, in this embodiment, where Fig. 15 shows the part of the catalyst unit of a catalytic converter in an exploded state, unit connecting rods 43 integrally formed with terminals 42 projecting from the casing 14 to the outside are fixed to the catalyst unit groups U₁ and U₂, respectively. These terminals 42 may be electrically connected to each other by a connecting fitting 44 outside the casing 14. Also, in these figures, parts corresponding to those in the first embodiment as shown in Figs. 1 to 3 are indicated at the same characters.

### Embodiment 4

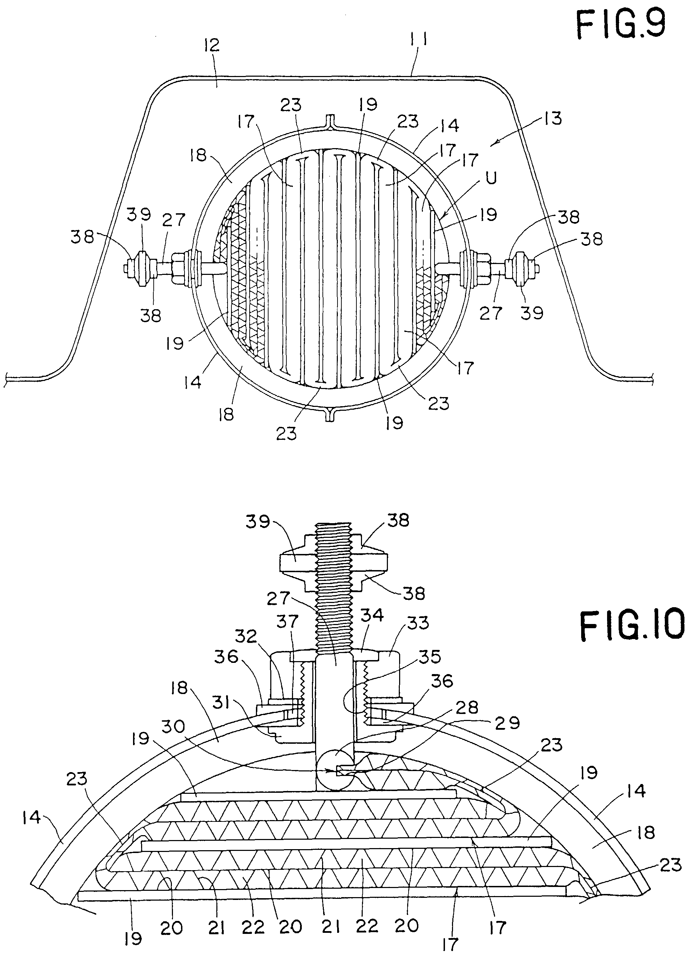

Next, there will be described a fourth embodiment wherein the casing 14 is formed in a circular or polygonal shape in section with reference to Figs. 9 to 11.

The casing 14 in this embodiment comprises a portion having a circular appearance for storing the catalyst units 17, and a pair of portions each having a conical appearance and respectively connected to the connection flanges 15 and 16, In this casing 14, there are stored a plurality of catalyst units 17 arranged in specified intervals along the width direction of the vehicular body (right and left directions, in Fig. 2), the supporter 18 interposed between the catalyst units 17 and the casing 14, and the sheet-like spacers 19 each interposed between the adjacent catalyst units 17 in the array direction.

Thus, by formation of the casing 14 in a circular shape in section, it is possible to ununiformly distribute the holding force to the catalyst units 17 and the like stored in the casing 14, and hence to minimize the risk that each catalyst unit 17 is damaged by the application of the uneven load.

The parts substantially corresponding to those of the first embodiment are indicated with the same characters, and the explanation thereof is omitted.

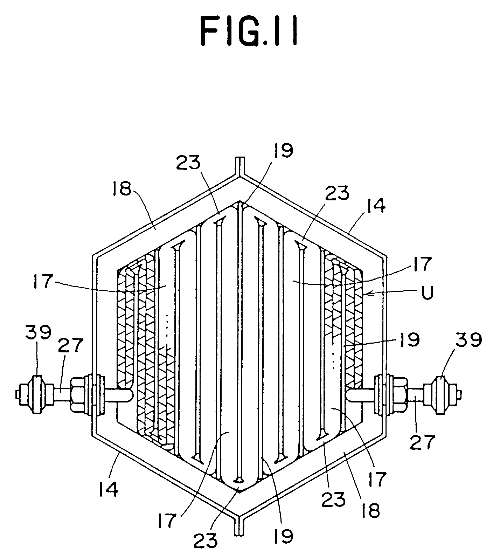

Also, Fig. 11 shows a casing 14 having a hexagonal sectional shape.

As shown in this figure, in a pair of the right and left halves of the casing 14 each having a trapezoidal shape, both the upper and lower end portions thereof are seam-welded to each other to form the casing 14 as a hexagonal cylinder, in which the catalyst units 17 and the like are tightly stored according to the shape of the inner peripheral wall of the casing 17. In this case, it is preferable to form each folded portion 23 in parallel to the inner peripheral wall of the casing 14. In addition, just as the first embodiment, the strip-like material for the catalyst units 17 is folded in the zigzag manner in the state that the plate-like core bar is mounted to each the folded portion 23.

### Embodiment 5

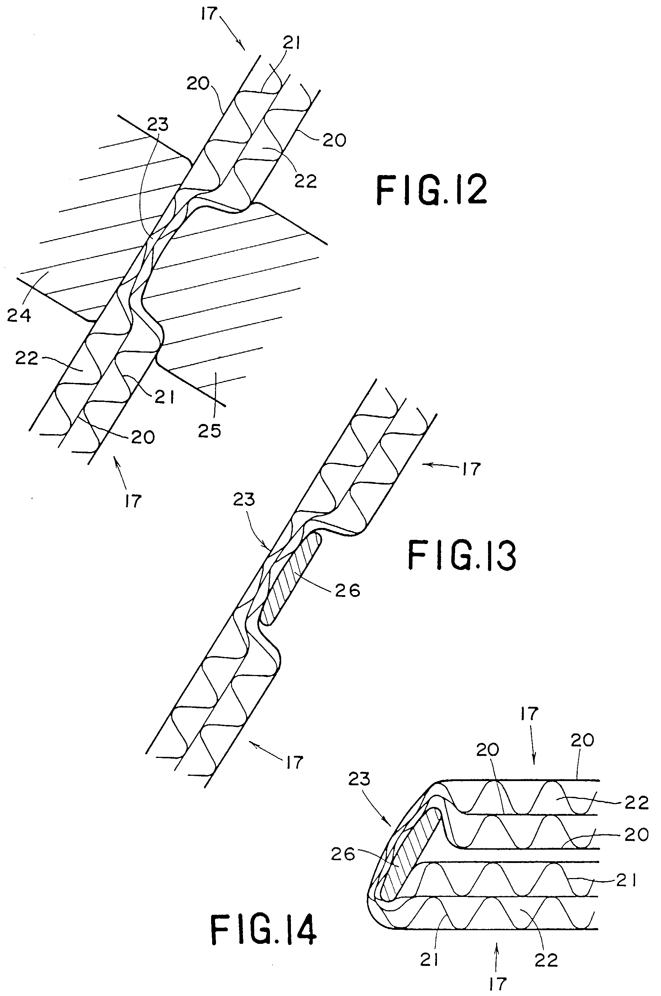

Next, a fifth embodiment will be described with reference to Figs. 12 to 14.

The fifth embodiment refers to a method of fabricating the catalyst unit group U to be disposed in the casing 14 with a circular or polygonal shape as described in the fourth embodiment.

Each folded portion 23 of a strip-like material for the catalyst units 17 is crushed between a pair of a die 24 and a punch 25 (see Fig. 12); a core bar 26 is contacted with the plastically deformed folded portion 23 on the die 24 side (see Fig. 13); the leading edge side of the material for the catalyst units 17 is folded at 180° along the core bar 26 with respect to the core bar 26 (see Fig. 14); and the core bar 26 is removed, to thereby form the folded portion 23.

The outer peripheral surface (right side surface, in Fig. 13) of the core bar 26 abutted on the folded portion 23 has a circular-arc section having a curvature corresponding to that of the casing 14, and the inclined angle of the core bar 26 to the material for the catalyst units 17 is set according to the position of the folded portion 23 with respect to the casing 14. Also, the core bar 26 may be integrally joined to the folded portion 23 of the material for the catalyst units 17 as it is.

In this embodiment, it is possible to form each folded portion 23 in parallel to the inner peripheral wall of the casing 14.

## Claims

1. A method of fabricating an exhaust gas purifying catalytic converter including a catalyst carrier (17) of strip-like honeycomb structure (20, 21) which forms a plurality of parallel reaction passages (22), comprising the steps of
crushing portions of the honeycomb structure (20, 21) in directions parallel to said reaction passages (22), and
folding the catalyst carrier (17) in alternate directions substantially 180° opposite to each other at said crushed portions (23),
**characterised** in
that the honeycomb structure (20, 21) is crushed from only one surface side of said strip-like carrier (17), and
that the catalyst carrier (17) is folded about core bars (26) positioned at the other surface side of the carrier.

2. The method of claim 1, wherein the cross-sectional shape of the core bar (26) is such that the shape of the folded portion (23) corresponds to that of a casing (14) surrounding said catalyst carrier (17).

3. The method of claim 1 or 2, wherein the honeycomb structure (20, 22), at an end portion (30) of the catalyst carrier (17), is crushed by pressing and the end portion (30) is inserted in a groove (29) formed in an electrode connecting rod (28).

## Patentansprüche

1. Verfahren zur Herstellung eines katalytischen Konverters zur Abgasreinigung, der einen Katalysatorträger (17) mit einer mehrere parallele Reaktionskanäle (22) bildenden streifenartigen Wabenstruktur (20, 21) aufweist, wobei
Teile der Wabenstruktur (20, 21) in zu den Reaktionskanälen (22) parallelen Richtungen zerdrückt und
der Katalysatorträger (17) an den zerdrückten Teilen (23) abwechselnd in um 180° zueinander entgegengesetzten Richtungen gefaltet wird,
dadurch **gekennzeichnet**,
daß die Wabenstruktur (20, 21) von der Seite nur einer Oberfläche des streifenförmigen Trägers (17) zerdrückt wird, und
daß der Katalysatorträger (17) um an der Seite der anderen Oberfläche des Trägers angeordnete Kernstäbe (26) herum gefaltet wird.

2. Verfahren nach Anspruch 1, wobei die Querschnittsform des Kernstabs (26) so gewählt ist, daß die Form des gefalteten Teils (23) der eines den Katalysatorträger (17) umgebenden Gehäuses (14) entspricht.

3. Verfahren nach Anspruch 1 oder 2, wobei die Wabenstruktur (20, 22) an einem Endabschnitt (30) des Katalysatorträgers (17) durch Pressen zerdrückt und der Endabschnitt (30) in eine in einem Elektroden-Verbindungsstab (28) ausgebildeten Nut (29) eingefügt wird.

## Revendications

1. Procédé de fabrication d'un convertisseur catalytique pour l'épuration de gaz d'échappement, comportant un support (17) de catalyseur à structure alvéolaire (20, 21) en forme de bande qui forme une pluralité de passages de réaction parallèles (22), comprenant les étapes consistant à
écraser des parties de la structure alvéolaire (20, 21) dans des directions parallèles auxdits passages de réaction (22), et
plier le support (17) de catalyseur dans des directions alternées opposées sensiblement à 180° l'une par rapport à l'autre au niveau desdites parties écrasées (23),
caractérisé en ce que
la structure alvéolaire (20, 21) n'est écrasée que du côté d'une seule surface dudit support (17) en forme de bande, et
le support (17) de catalyseur est plié autour de barres centrales (26) disposées du côté de l'autre surface du support.

2. Procédé selon la revendication 1, dans lequel la barre centrale (26) à une section transversale d'une forme telle que la forme de la partie pliée (23) correspond à celle d'une enveloppe (14) entourant ledit support (17) de catalyseur.

3. Procédé selon la revendication 1 ou 2, dans lequel la structure alvéolaire (20, 22), au niveau d'une extrémité (30) du support (17) de catalyseur, est écrasée par compression et l'extrémité (30) est insérée dans une gorge (29) formée dans une tige (28) de connexion d'électrode.
